# EUROPEAN PATENT APPLICATION

(11) **EP 4 521 251 A1**
(43) Date of publication of application: **12.03.2025**
(21) Application number: 24194805.8
(22) Date of filing: 15.08.2024
(51) Int. Cl.: G06F 9/50, G06F 9/455, G06N 20/00

(54) **SCHEDULING OPTIMIZATION FOR CONTAINERIZED INSTANCES**

(30) Priority: 08.09.2023 US 202318463828
(71) Applicant: Red Hat, Inc., Raleigh, NC 27601 (US)
(72) Inventor: FALOSSI, Alberto, Raleigh (US); SALOMON, Yehoshua, Raleigh (US)
(74) Representative: Murgitroyd & Company

(57) **Abstract**

A computing device determines a state of each containerized instance of containerized instances executing on a compute node in a cluster of compute nodes. The computing device determines a state of each compute node in the cluster. The computing device calculates, for each respective compute node in the cluster, a cost associated with each containerized instance on the respective compute node based on the state of each containerized instance and the state of each compute node. The computing device creates a list of preferred compute nodes for each containerized instance to execute on based on the state of each containerized instance, the state of each compute node, and the cost associated with each containerized instance for each compute node in the cluster. The computing device causes, based on the list, a first containerized instance of the containerized instances to be moved to a first compute node identified in the list.

## Description

### BACKGROUND

Container orchestration systems automate the deployment, scaling, and management of containerized applications among nodes in a cluster. The containerized applications can be assigned to a node in a cluster.

### SUMMARY

The examples disclosed herein implement scheduling optimization for containerized instances. A container orchestration system can select the best node to execute a containerized instance based on several factors. The container orchestration can select the best node to execute the containerized instance on after the containerized instance has been running and can move the containerized instance to the best node when the best node is a different node than the node that the containerized instance is currently executing on. The container orchestration can consider factors such as the costs of running the containerized instance on the nodes in the cluster and the states of the containerized instance and the nodes in order to determine the best node for the containerized instance to execute on for optimal performance. The best node for the containerized instance on which to execute for optimal performance may be in accordance with an optimization target, such as the best node for reducing costs or energy consumption.

In one example, a method for scheduling optimization for containerized instances is provided. The method includes determining, by a container orchestration system (COS) executing on a computing device, a first current state of each containerized instance of a plurality of containerized instances executing on a compute node in a cluster of compute nodes. The method further includes determining, by the COS, a first current state of each compute node in the cluster of compute nodes. The method further includes calculating, by the COS, for each respective compute node in the cluster of compute nodes, a first cost associated with each containerized instance on the respective compute node based on the first current state of each containerized instance and the first current state of each compute node. The method further includes creating, by the COS, a list of preferred compute nodes for each containerized instance to execute on based on the first current state of each containerized instance, the first current state of each compute node, and the first cost associated with each containerized instance for each compute node in the cluster of compute nodes. The method further includes causing, by the COS based on the list of preferred compute nodes, a first containerized instance of the plurality of containerized instances to be moved to a first compute node identified in the list of preferred compute nodes.

In another example, a computing device for scheduling optimization for containerized instances is provided. The computing device includes a memory and a processor device coupled to the memory. The processor device is to determine a first current state of each containerized instance of a plurality of containerized instances executing on a compute node in a cluster of compute nodes. The processor device is further to determine a first current state of each compute node in the cluster of compute nodes. The processor device is further to calculate, for each respective compute node in the cluster of compute nodes, a first cost associated with each containerized instance on the respective compute node based on the first current state of each containerized instance and the first current state of each compute node. The processor device is further to create a list of preferred compute nodes for each containerized instance to execute on based on the first current state of each containerized instance, the first current state of each compute node, and the first cost associated with each containerized instance for each compute node in the cluster of compute nodes. The processor device is further to cause, based on the list of preferred compute nodes, a first containerized instance of the plurality of containerized instances to be moved to a first compute node identified in the list of preferred compute nodes.

In another example, a non-transitory computer-readable storage medium for scheduling optimization for containerized instances is provided. The non-transitory computer-readable storage medium includes computer-executable instructions to cause a processor device to determine a first current state of each containerized instance of a plurality of containerized instances executing on a compute node in a cluster of compute nodes. The instructions further cause the processor device to determine a first current state of each compute node in the cluster of compute nodes. The instructions further cause the processor device to calculate, for each respective compute node in the cluster of compute nodes, a first cost associated with each containerized instance on the respective compute node based on the first current state of each containerized instance and the first current state of each compute node. The instructions further cause the processor device to create a list of preferred compute nodes for each containerized instance to execute on based on the first current state of each containerized instance, the first current state of each compute node, and the first cost associated with each containerized instance for each compute node in the cluster of compute nodes. The instructions further cause the processor device to cause, based on the list of preferred compute nodes, a first containerized instance of the plurality of containerized instances to be moved to a first compute node identified in the list of preferred compute nodes.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of a runtime environment in which examples of scheduling optimization for containerized instances may be practiced;
Figure 2 is a flowchart of a method for scheduling optimization for containerized instances in the runtime environment of Figure 1, according to one example;
Figure 3 is a block diagram of the runtime environment of Figure 1 for scheduling optimization for containerized instances, according to one example;
Figure 4 is a block diagram of the runtime environment of Figure 1 for scheduling optimization for containerized instances, according to one example;
Figure 5 is a block diagram of the runtime environment of Figure 1 for scheduling optimization for containerized instances, according to one example;
Figure 6 is a flowchart of a method for scheduling optimization for containerized instances in the runtime environment of Figure 1, according to one example;
Figure 7 is a block diagram of the runtime environment of Figure 1 for scheduling optimization for containerized instances, according to one example;
Figure 8 is a block diagram of a computing device suitable for implementing aspects illustrated in Figures 1-5 according to one example;
Figure 9 is a block diagram of the computing device of Figure 1 for scheduling optimization for containerized instances, according to one example;
Figure 10 is a block diagram of the runtime environment of Figure 1 for scheduling optimization for containerized instances, according to one example; and
Figure 11 is a block diagram of a runtime environment suitable for implementing examples, according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the elements unless otherwise explicitly specified. The word "or" as used herein and in the claims is inclusive unless contextually impossible. As an example, the recitation of A or B means A, or B, or both A and B. The word "data" may be used herein in the singular or plural depending on the context.

Containerization technologies, such as, by way of non-limiting example, Docker^{®} container technology, Kubernetes^{®} container technology, CoreOS (Rocket) container technology, Tectonic container technology, and the like, are increasingly popular due, in part, to their relatively low resource requirements compared to other process isolation mechanisms, such as virtual machines. Entities that utilize container technologies often prefer that all processes executed in a computing environment be capable of being containerized and run as containers.

Container orchestration systems automate the deployment, scaling, and management of containerized applications among nodes in a cluster. The containerized applications, and the containerized instances that containerized applications execute on, can be assigned to a node in a cluster. A containerized instance can be assigned to execute on a node and will continue to run on that node, however, if a better node is available to improve the performance of the cluster, then the containerized instance should be able to be moved to the better node.

The examples disclosed herein implement scheduling optimization for containerized instances. A container orchestration system can select the best node to execute a containerized instance based on several factors. The container orchestration can select the best node to execute the containerized instance on after the containerized instance has been running and can move the containerized instance to the best node when the best node is a different node than the node that the containerized instance is currently executing on. The container orchestration can consider factors such as the costs of running the containerized instance on the nodes in the cluster, the states of the containerized instance and the nodes, computing resources available, and performance constraints in order to determine the best node for the containerized instance to execute on.

A machine learning algorithm can be used to continuously learn the optimal nodes for the containerized instances that are running on the nodes. The machine learning algorithm can use the factors in order to determine the best nodes for containerized instances to execute on. Once the best node for a containerized instance is determined, the machine learning algorithm can use that information to learn the optimal node for the containerized instance, which can be used in further training the machine learning algorithm to learn the optimal nodes for the containerized instances.

The term "containerized application" as used herein refers to an application that comprises one or more container images, and is initiated and managed via a container orchestration system. The term "containerized instance" as used herein refers to an entity that includes a container that is initiated from a container image. The phrase "container" as used herein refers to Linux^{®} containers wherein the Linux^{®} kernel uses namespaces to isolate processes from one another. The phrase "container image" as used herein refers to a static package of software comprising one or more layers, the layers including everything needed to run an application (i.e., as a container) that corresponds to the container image, including, for example, one or more of executable runtime code, system tools, system libraries and configuration settings. A Docker^{®} image is an example of a container image. When executed, a container image is initiated as a Linux^{®} container, wherein the Linux^{®} kernel features cgroups and namespaces are used to isolate container processes from one another. A container image is often created from a containerization technology, such as, by way of non-limiting example, Docker^{®}, or the like. The term "container orchestration system" refers to a system that automates the deployment, scaling, and management of containerized applications among nodes in a cluster. A cluster is a set of nodes that run containerized applications. Nodes can be virtual or physical machines that contain the services and resources necessary to run containerized applications. The Kubernetes^{®} container orchestration system (Kubernetes.io) is one example of a container orchestration system. A containerized instance may comprise only a container, or may comprise, for example, a logical grouping of containers in the same namespace such as a Kubernetes^{®} pod. A pod is a logical entity that isolates one or more containers from containers in another pod. A pod is defined via a pod specification which includes information such as an identification of the containers in the pod, the volumes used by the containers in the pod, and the like. The nodes in a cluster can host pods and a node may have one or more pods. The term "resource" as used herein refers to any individual component managed by the container orchestration system for which, if requested, the container orchestration system will return information specific to the resource.

The examples will be discussed herein in the context of the Kubernetes^{®} container orchestration system and utilize terminology used in the Kubernetes^{®} container orchestration system; however, the examples are applicable to any container orchestration system capable of deploying, scaling, and managing containerized applications among nodes in a cluster.

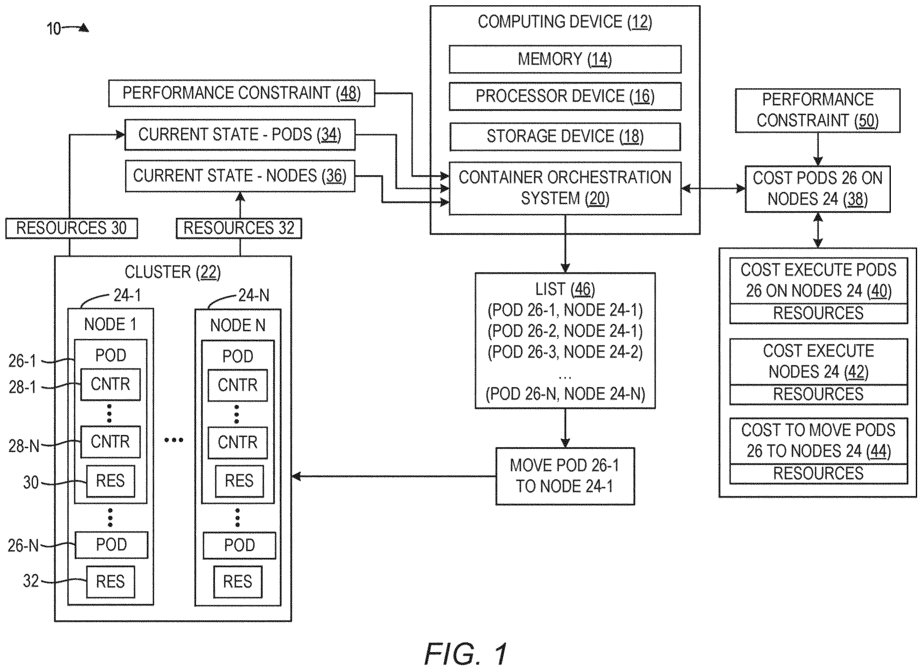

Figure 1 is a block diagram of a runtime environment 10 in which examples of scheduling optimization for containerized instances may be practiced. The runtime environment 10 includes a computing device 12 that comprises a system memory 14, a processor device 16, and a storage device 18. The runtime environment 10 may comprise any containerization technology or containerization technologies, such as, by way of non-limiting example, OpenShift^{®}, Docker^{®}, Kubernetes^{®}, or the like. In some examples, the runtime environment 10 is implemented in a cloud computing environment, such as, by way of non-limiting example, an Amazon Web Services (AWS) or Microsoft Azure cloud computing environment. The computing device 12 includes a container orchestration system 20 that executes on the computing device 12 and performs scheduling optimization for containerized instances. While for purposes of illustration only one computing device 12 is illustrated, in operation, the runtime environment 10 may have hundreds or thousands of computing devices. It is to be understood that the runtime environment 10 and the computing device 12 in some examples may include constituent elements in addition to those illustrated in Figure 1.

The runtime environment 10 includes a cluster 22. While for purposes of illustration only one cluster 22 is illustrated, in operation, the runtime environment may have multiple clusters. The cluster 22 includes a plurality of nodes 24-1 - 24-N (collectively, nodes 24). The container orchestration system 20 can deploy, scale, and manage containerized applications by distributing resources across the nodes 24. The container orchestration system 20 may comprise any suitable container orchestration system capable of deploying containerized applications across a cluster of nodes. The term "deploy" as used herein refers to an installation and/or set up process of a resource on a cluster, but does not necessarily require that the resource be initiated and/or running. In some implementations, the container orchestration system 20 comprises the Kubernetes^{®} container orchestration system. While the container orchestration system 20, solely for purposes of illustration, is illustrated as a single component embodied in the computing device 12, in practice, the container orchestration system 20 may be implemented by any number of modules, such as the cluster 22, and may be in part distributed across multiple nodes (including, but not limited to the nodes 24).

Each node of the nodes 24 may comprise a computing host (e.g., a bare metal machine or a virtual machine). Each node of the nodes 24 may contain one or more pods 26-1 - 26-N (collectively, pods 26), which may each contain one or more containers 28-1 - 28-N (collectively, containers 28). Each pod of the pods 26 may have resources 30 for executing the pod and/or the one or more containers of the pod. Each container of the containers 28 may contain an application (not illustrated) that is deployed on the container in the pod 26 and each container may contain resources (not illustrated) for executing the container. Each node of the nodes 24 may also contain resources 32 that are available on the respective node, and which may be used by the pods 26 of the respective node. The resources of each container, the resources 30 of each pod, and the resources 32 of each node may include computing resources or network resources, as non-limiting examples, that are available for use by the respective container, the respective pod, and the respective node (e.g., a maximum amount of CPU, memory, and bandwidth is available for use by the container, pods, and nodes). For instance, a first pod and a second pod may execute on one physical multi-core CPU and the first pod may receive a portion of the CPU (e.g., 2 virtual CPUs) while the second pod may receive another portion of the CPU (e.g., 4 virtual CPUs). Additional pods may receive virtual CPUs until the physical CPU is at maximum capacity and no additional pods can use the physical CPU resources. In operation, the runtime environment 10 may have hundreds or thousands of containers 28, pods 26, and nodes 24 executing at any given time. The pods 26 and the nodes 24 may each have hundreds or thousands of containers 28 executing at any given time.

The container orchestration system 20 may determine a current state 34 of each containerized instance of the containerized instances (e.g., each pod of the pods 26) executing on a node of the nodes 24 in the cluster 22. The container orchestration system 20 can determine the current state 34 of each containerized instance of the containerized instances (e.g., each pod of the pods 26) by obtaining the resources 30 of each containerized instance of the containerized instances from the respective containerized instance. The resources 30 may include computing resources utilized and available for use by the respective containerized instance (e.g., the respective pod), such as CPU and memory as non-limiting examples. The current state 34 can include the resources 30 of the respective containerized instance of the containerized instance (e.g., the respective pod of the pods 26), metrics for the containerized instances (e.g., the pods 26), such as the resources 30 utilized and available for use, operating costs, the performance of the respective containerized instance, the availability of the respective containerized instance (e.g., network availability, resource availability), the number of containers running on the respective containerized instance (e.g., when the containerized instance is a pod), the performance of an application running on the containerized system, and which node that the respective containerized instance is on, as non-limiting examples.

The container orchestration system 20 may determine a current state 36 of each node of the nodes 24 in the cluster 22. The container orchestration system 20 can determine the current state 36 of each node of the nodes 24 by obtaining the resources 32 of each node of the nodes 24 from the respective node. The resources 32 may include computing resources utilized and available for use by the respective node, such as CPU and memory as non-limiting examples. The current state 36 can include the resources 32 of the respective node of the nodes 24, metrics for the nodes 24, such as the resources 32 utilized and available for use, network settings, contents, operating costs, the performance of the respective node, the availability of the respective node (e.g., network availability, resource availability), the number of nodes running in the cluster 22, the number of containerized instances running on the respective node, and the number of containers running in the containerized instances (e.g., when the containerized instances are pods) running on the respective node, as non-limiting examples.

The container orchestration system 20 can calculate a cost 38 for each node of the nodes 24. The cost 38 for each node can be associated with each containerized instance (e.g., each pod) on the respective node. The cost 38 can be based on the current state 34 of each containerized instance (e.g., each pod) on the respective node and the current state 36 of the respective node. In order to calculate the cost 38 for each node of the nodes 24, the container orchestration system 20 can determine costs 40 for each containerized instance to execute on the respective node, such as computing resources (e.g., CPU and memory) needed to execute the respective containerized instance on the respective node. For instance, the current state 34 of the respective containerized instance (e.g., the respective pod of the pods 26) may indicate the resources 30 of the respective containerized instance, the energy consumption of the respective containerized instance, the performance of the respective containerized instance, the availability of the respective containerized instance (e.g., network availability, resource availability), the number of containers running on the respective containerized instance (e.g., when the containerized instance is a pod), and which node that the respective containerized instance is on, which the container orchestration system 20 can use to determine the costs 40 for the respective containerized instance to execute on the respective node. For example, the costs 40 may indicate that it costs 2GB of memory and a decrease in network availability for pod 26-1 to execute on node 24-1.

In order to calculate the cost 38 for each node of the nodes 24, the container orchestration system 20 can also determine costs 42 for each node to execute in the cluster 22, such as computing resources (e.g., CPU and memory) needed to execute the respective node in the cluster 22. For instance, the current state 36 of the respective node of the nodes 24 may indicate the resources 32 of the respective node, the energy consumption of the respective node, the performance of the respective node, the availability of the respective node (e.g., network availability, resource availability), the number of containerized instances (e.g., pods 26) running on the respective node, and the number of containers running in the containerized instance (e.g., when the containerized instance is a pod) running on the respective node, which the container orchestration system 20 can use to determine the costs 42 for the respective node to execute in the cluster 22. For example, the costs 42 may indicate that it costs CPU and a reduction in performance for node 24-1 to execute both pod 26-1 and pod 26-2 because pod 26-1 and pod 26-2 require high amounts of CPU and the resources 32 of node 24-1 are limited on CPU.

In order to calculate the cost 38 for each node of the nodes 24, the container orchestration system 20 can also determine costs 44 to move each containerized instance of the containerized instances (e.g., each pod of the pods 26) to each node of the nodes 24. The costs 44 to move each containerized instance of the containerized instances (e.g., each pod of the pods 26) to each node of the nodes 24 can include computing resources (e.g., CPU and memory) needed or energy consumption to move each containerized instance to each node, performance costs, such as degradation in performance due to the move, communications and data costs, such as the cost to move data, costs associated with cloud providers, and expected gains in performance and resources due to the move, as non-limiting examples. For instance, the container orchestration system 20 can determine the cost to move pod 26-1 to node 24-1, the cost to move pod 26-1 to node 24-2, and so on for moving pod 26-1 to each of the nodes 24, the cost to move pod 26-2 to node 24-1, the cost to move pod 26-2 to node 24-2, and so on for moving pod 26-2 to each of the nodes 24, and the cost for moving each of the pods 26 to each of the nodes 24, which are all included in the costs 44 to move. For example, the costs 44 to move pod 26-1 to node 24-1 may be an increased cost with a cloud provider and an increase in performance because pod 26-1 does requires more CPU or memory and the costs 44 to move pod 26-1 to node 24-2 may be a decreased cost with a cloud provider and an increase in performance because pod 26-1 does requires more CPU or memory.

The container orchestration system 20 may create a list 46 of preferred nodes of the nodes 24 for each containerized instance of the containerized instances (e.g., each pod of the pods 26) to execute on. The list 46 may be based on the current state 34 of each containerized instance of the containerized instances (e.g., each pod of the pods 26), the current state 36 of each node of the nodes 24, and the cost 38 associated with each containerized instance on each node. For instance, the preferred node for a containerized instance may be the node where the current state 34 of the containerized instance and the current state 36 of the node are balanced with the cost 38 associated with the containerized instance on the node (i.e., the benefit to cost ratio is suitable). The list 46 may be a list of a preferred node of the nodes 24 for each containerized instance of the containerized instances (e.g., each pod of the pods 26). For instance, the list 46 may be a list of ordered pairs of a containerized instance (e.g., a pod) and a node that is the preferred node of the nodes 24 for the containerized instance to execute on for optimal performance of the containerized instance, the application, the node, and the cluster 22. For example, the first pair in the list 46 may be pod 26-1 and node 24-1, the second pair in the list may be pod 26-2 and node 24-1, the third pair in the list may be pod 26-3 and node 24-2, and so on with one pair for every pod of the pods 26, which indicates that the preferred node for pod 26-1 to be on is node 24-1, the preferred node for pod 26-2 to be on is node 24-1, and the preferred node for pod 26-3 to be on is node 24-2.

In some implementations, the list 46 may be a list of more than one preferred node of the nodes 24 for each containerized instance of the containerized instances (e.g., each pod of the pods 26). For instance, the list 46 may be a list of ordered pairs of a containerized instance (e.g., a pod) and more than one node that are the preferred nodes for the containerized instance to execute on for optimal performance of the containerized instance and the node. For example, the first pair in the list may be pod 26-1 paired with node 24-1 and node 24-2, and so on with pairs for every pod of the pods 26, which indicates that the preferred nodes for pod 26-1 to be on are node 24-1 or node 24-2, and node 24-1 may be the first preferred node for pod 26-1 and node 24-2 may be the second preferred node for pod 26-1 because node 24-1 is listed before node 24-2. The list 46 may be stored in the storage device 18, a database, a cloud computing device, or a server, as non-limiting examples, or by another method to store the list 46.

In another example, the container orchestration system 20 may determine that a containerized instance of the containerized instances (e.g., a pod of the pods 26) can be removed based on the current state 34 of each containerized instance of the containerized instances (e.g., each pod of the pods 26), the current state 36 of each node of the nodes 24, and the cost 38 associated with each containerized instance on each node. For instance, pod 26-1 and pod 26-2 may each run the same application. The current state 34 of pod 26-1, the current state 34 of pod 26-2, the cost 38 associated with pod 26-1 and the cost 38 associated with pod 26-2 may indicate that the application can meet performance goals for the application with only one instance of the pod that is running the application. The container orchestration system 20 can remove one of the pods, such as pod 26-2, as a result in order to reduce energy consumption and costs.

In some examples, the container orchestration system 20 may obtain a performance constraint 48 that is associated with the current state 34 of each containerized instance of the containerized instances (e.g., each pod of the pods 26). For instance, the performance constraint 48 may be related to computing resources, such as a minimum or maximum CPU or memory requirement for the respective containerized instance or a size of the containerized instances, such as a smallest size containerized instance (e.g., for private clouds), and can be provided by a user, such as in a service level agreement (SLA). The container orchestration system 20 may create the list 46 of one or more preferred nodes of the nodes 24 for each containerized instance of the containerized instances (e.g., each pod of the pods 26) to execute on based on the current state 34 of each containerized instance of the containerized instances (e.g., each pod of the pods 26), the current state 36 of each node of the nodes 24, the cost 38 associated with each containerized instance on each node, and the performance constraint 48. In some examples, the container orchestration system 20 may obtain a performance constraint 50 associated with the cost 38 associated with each containerized instance (e.g., each pod) on each node of the nodes 24. For instance, the performance constraint 50 may be a maximum cost for public clouds, such as data or storage costs associated with a cloud provider, and can be provided by a user, such as in an SLA. The container orchestration system 20 may create the list 46 of one or more preferred nodes of the nodes 24 for each containerized instance of the containerized instances (e.g., each pod of the pods 26) to execute on based on the current state 34 of each containerized instance of the containerized instances (e.g., each pod of the pods 26), the current state 36 of each node of the nodes 24, the cost 38 associated with each containerized instance on each node, and the performance constraint 50.

The container orchestration system 20 may obtain both the performance constraint 48 that is associated with the current state 34 of each containerized instance of the containerized instances (e.g., each pod of the pods 26) and the performance constraint 50 associated with the cost 38 associated with each containerized instance (e.g., each pod) on each node of the nodes 24. In implementations where the container orchestration system 20 obtains both the performance constraint 48 and the performance constraint 50, the container orchestration system 20 may create the list 46 of one or more preferred nodes of the nodes 24 for each containerized instance of the containerized instances (e.g., each pod of the pods 26) to execute on based on the current state 34 of each containerized instance of the containerized instances (e.g., each pod of the pods 26), the current state 36 of each node of the nodes 24, the cost 38 associated with each containerized instance on each node, the performance constraint 48, and the performance constraint 50.

The container orchestration system 20 may cause a containerized instance of the containerized instances (e.g., a pod of the pods 26) to be moved to a node of the nodes 24 based on the list 46 of preferred nodes, where the node that the containerized instance is moved to is identified in the list 46 as the preferred node for the containerized instance. For example, pod 26-1 may be on node 24-1 and the list 46 may identify node 24-2 as the preferred node for pod 26-1, so the container orchestration system 20 can cause the pod 26-1 to be moved to the node 24-2. The list 46 may indicate that the preferred node for the containerized instance is the same node in which the containerized instance is on, and the containerized instance may cause the containerized instance to stay on the same node. In some implementations, the container orchestration system 20 may cause a node to be added to the nodes 24 or a node to be removed from the nodes 24 based on the current state 34 of each containerized instance of the containerized instances (e.g., each pod of the pods 26), the current state 36 of each node of the nodes 24, and the cost 38 associated with each containerized instance on each node. In some examples, the list 46 may be stored (e.g., on the storage device 18) and the container orchestration system 20 may access the location where the list 46 is stored in order to obtain the list 46, read the list 46, and cause a containerized instance to be moved to a node based on the list 46.

It is to be understood that, because the container orchestration system 20 is a component of the computing device 12, functionality implemented by the container orchestration system 20 may be attributed to the computing device 12 generally. Moreover, in examples where the container orchestration system 20 comprises software instructions that program the processor device 16 to carry out functionality discussed herein, functionality implemented by the container orchestration system 20 may be attributed herein to the processor device 16. It is to be further understood that while, for purposes of illustration only, the container orchestration system 20 is depicted as a single component, the functionality implemented by the container orchestration system 20 may be implemented in any number of components, and the examples discussed herein are not limited to any particular number of components.

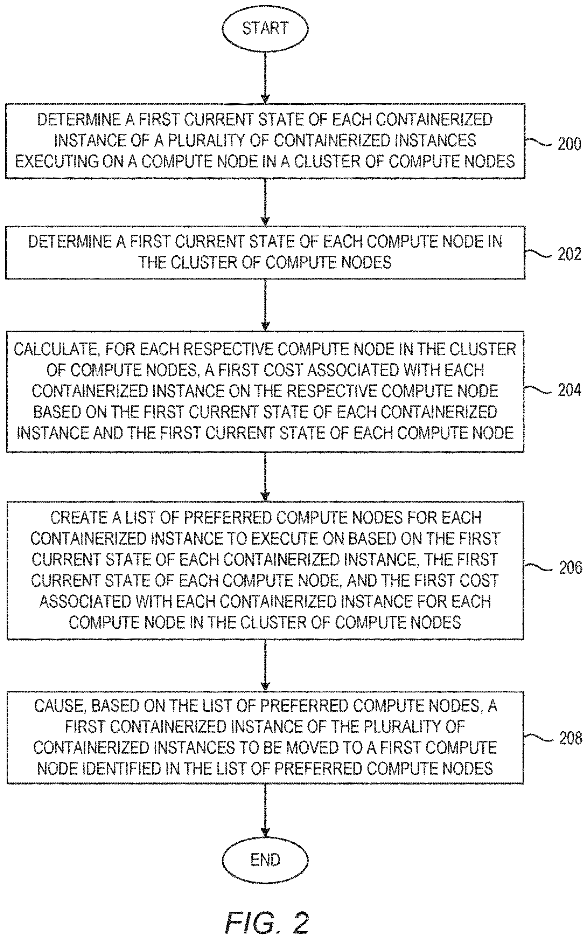

Figure 2 is a flowchart of a method for scheduling optimization for containerized instances in the runtime environment of Figure 1, according to one example. Elements of Figure 1 are referenced in describing Figure 2 for the sake of clarity. In Figure 2, operations begin with a processor device of a computing device, such as the processor device 16 of the computing device 12 of Figure 1, the processor device 16 to determine a first current state of each containerized instance of a plurality of containerized instances executing on a compute node in a cluster of compute nodes (block 200). The processor device 16 is further to determine a first current state of each compute node in the cluster of compute nodes (block 202). The processor device 16 is further to calculate, for each respective compute node in the cluster of compute nodes, a first cost associated with each containerized instance on the respective compute node based on the first current state of each containerized instance and the first current state of each compute node (block 204). The processor device 16 is further to create a list of preferred compute nodes for each containerized instance to execute on based on the first current state of each containerized instance, the first current state of each compute node, and the first cost associated with each containerized instance for each compute node in the cluster of compute nodes (block 206). The processor device 16 is further to cause, based on the list of preferred compute nodes, a first containerized instance of the plurality of containerized instances to be moved to a first compute node identified in the list of preferred compute nodes (block 208).

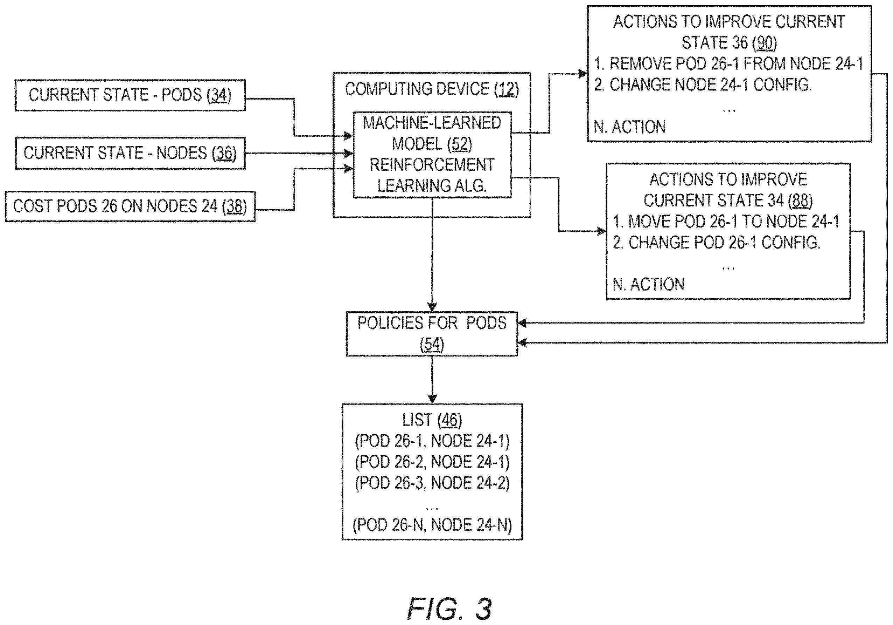

Figure 3 is a block diagram of the runtime environment of Figure 1 for scheduling optimization for containerized instances, according to one example. Elements of Figure 1 are referenced in describing Figure 3 for the sake of clarity. In the example of Figure 3, the container orchestration system 20 may create the list 46 of preferred nodes of the nodes 24 for each containerized instance of the containerized instances (e.g., each pod of the pods 26) to execute on by using a machine-learned model 52. The machine-learned model 52 may receive the current state 34 of each containerized instance of the containerized instances (e.g., each pod of the pods 26), the current state 36 of each node of the nodes 24, and the cost 38 for each node. The machine-learned model 52 can use the current state 34 of each containerized instance, the current state 36 of each node, and the cost 38 for each node to determine a policy 54 for each containerized instance (e.g., each pod). The policy 54 for a containerized instance may be the pair of the containerized instance and the preferred node for the containerized instance to execute on. The list 46 can be based on the policy 54 and can be an output of the machine-learned model 52. For instance, the list 46 can include the policy 54 determined by the machine-learned model 52 for each containerized instance, where the list 46 is a list of ordered pairs of a containerized instance and a node that is the preferred node of the nodes 24 for the containerized instance to execute on (i.e., the policy 54 for each containerized instance), and the list 46 can be the output of the machine-learned model 52.

In some implementations, the machine-learned model 52 may implement a reinforcement learning algorithm that allows the machine-learned model 52 to continuously learn the best node for each containerized instance (e.g., pod) to execute on (i.e., the policy 54) that maximizes the reward function of the reinforcement learning algorithm based on the current state of the environment (e.g., the current state 34 of each containerized instance of the containerized instances, the current state 36 of each node of the nodes 24, the cost 38 for each node, the performance constraint 48 that is associated with the current state 34, and the performance constraint 50 that is associated with the cost 38 in the runtime environment 10).

For instance, the reinforcement learning algorithm can receive the current state 34 of each containerized instance, the current state 36 of each node, the cost 38 for each node, the performance constraint 48 that is associated with the current state 34, and/or the performance constraint 50 that is associated with the cost 38, take actions 88 in the environment to improve the current state 34 and/or actions 90 to improve the current state 36, such as moving containerized instances to other nodes or changing the configuration of a containerized instance or node, and determine whether the current state 34, the current state 36, and/or the cost 38 are improved as a result of the actions 88 and/or the actions 90 (i.e., working through the exploration and exploitation phases of reinforcement learning). These steps may be performed at various times or on a schedule, or when there is a change in resources or the runtime environment 10, in order for the machine-learned model 52 to continuously and accurately learn the best node for each containerized instance to execute on. When the current state 34, the current state 36, and/or the cost 38 are improved, the reinforcement learning algorithm may determine the policy 54 for each containerized instance (e.g., each pod) based on the nodes that the containerized instances are executing on, such as after being moved or changing a configuration (e.g., the actions 88, the action 90). When the current state 34, the current state 36, and/or the cost 38 are not improved, the reinforcement learning algorithm may determine the policy 54 for each containerized instance

(e.g., each pod) based on the nodes that the containerized instances were executing on, such as before being moved or changing a configuration. As a result, over time, the reinforcement learning algorithm can learn the best state for each containerized instance and node, which can be reflected in the policy 54.

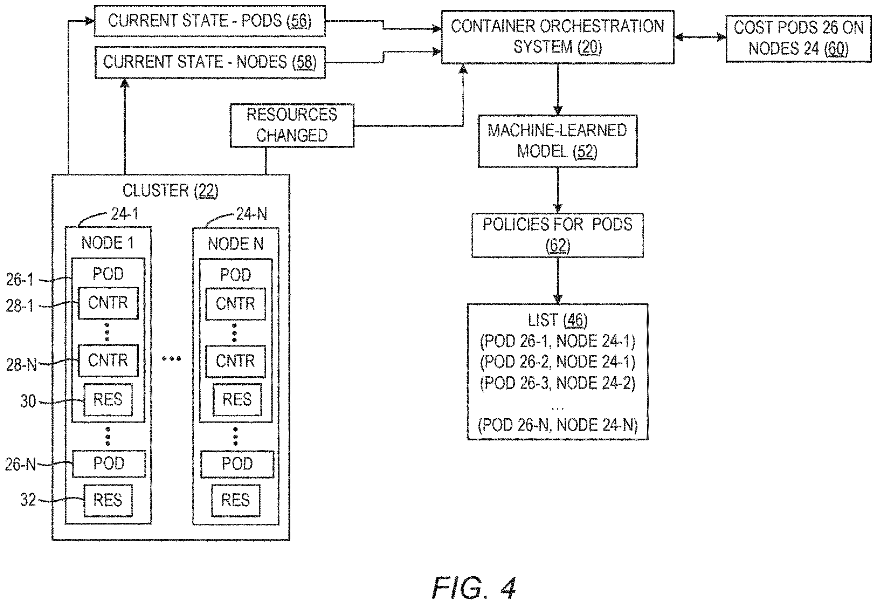

Figure 4 is a block diagram of the runtime environment of Figure 1 for scheduling optimization for containerized instances, according to one example.

Elements of Figure 1 are referenced in describing Figure 4 for the sake of clarity. In the example of Figure 4, the container orchestration system 20 may determine that there has been a change in the resources 32 available on one or more of the nodes 24 in the cluster 22. For example, the container orchestration system 20 may determine that there is less CPU available for use in node 24-1. In some examples, the container orchestration system 20 may determine that there has been a change in the resources 30 of one or more of the containerized instances. In some implementations, the container orchestration system 20 may determine that a node has been added to the cluster 22 or removed from the cluster 22, or that one or more containerized instances have been added to the nodes 24 or removed from the nodes 24. In response, the container orchestration system 20 may determine an updated current state 56 of each containerized instance of the containerized instances (e.g., each pod of the pods 26) and an updated current state 58 of each node of the nodes 24. The current state 56 can include information similar to the information included in the current state 34 and the current state 58 can include information similar to the information included in the current state 36.

The container orchestration system 20 can calculate a cost 60 for each node of the nodes 24. The cost 60 for each node can be associated with each containerized instance on the respective node. The cost 60 can be based on the current state 56 of each containerized instance (e.g., each pod) on the respective node and the current state 58 of the respective node. For instance, in order to calculate the cost 60 for each node of the nodes 24, the container orchestration system 20 can determine costs for each containerized instance to execute on the respective node, such as computing resources needed to execute the respective containerized instance on the respective node based on the current state 56. In order to calculate the cost 60 for each node of the nodes 24, the container orchestration system 20 can also determine costs for each node to execute in the cluster 22, such as computing resources needed to execute the respective node in the cluster 22, based on the current state 58. The container orchestration system 20 can also determine costs to move each containerized instance to each node, such as computing resources, performance costs, data costs, and expected gains in performance and resources, as non-limiting examples, in order to calculate the cost 60.

The container orchestration system 20 can update the list 46 of preferred nodes of the nodes 24 for each containerized instance of the containerized instances (e.g., each pod of the pods 26) to execute on. The list 46 can be updated based on the current state 56 of each containerized instance of the containerized instances (e.g., each pod of the pods 26), the updated current state 58 of each node of the nodes 24, and the cost 60 for each node. For example, before determining that there was a change in resources (e.g., a change in the resources 30 or the resources 32, or the addition or removal of a containerized instance or node), the list 46 may have included a pair of pod 26-1 and node 24-1, and after determining that there was a change in resources, the list 46 may be updated and instead include a pair of pod 26-1 and node 24-2, indicating that the preferred node for pod 26-1 is now node 24-2 instead of node 24-1. In some examples, the list 46 can additionally be updated based on a performance constraint associated with the current state 56 of each containerized instance (e.g., computing resources of the containerized instances, size of the containerized instances, bandwidth of the containerized instances, latency in the time for the containerized instances to respond to requests or events, an amount of requests or events the containerized instances can process over a period of time, or user-provided constraints, as non-limiting examples) and/or a performance constraint associated with the cost 60 associated with each containerized instance on each node (e.g., a maximum cost for public clouds or user-provided constraints, as non-limiting examples).

In some implementations, the list 46 can be updated by using the machine-learned model 52, which may implement a reinforcement learning algorithm in some examples. The machine-learned model 52 may receive the current state 56 of each containerized instance of the containerized instances (e.g., each pod of the pods 26), the current state 58 of each node of the nodes 24, and the cost 60 for each node. The machine-learned model 52 can use the current state 56 of each containerized instance, the current state 58 of each node, and the cost 60 for each node to determine a policy 62 for each containerized instance (e.g., each pod). The policy 62 for a containerized instance may be the pair of the containerized instance and the preferred node for the containerized instance to execute on after determining that there was a change in resources (e.g., a change in the resources 30 or the resources 32, or the addition or removal of a containerized instance or node), and determining the current state 56, the current state 58, and the cost 60. The list 46 can be updated by being based on the policy 62 instead of the policy 54, and the updated list 46 can be an output of the machine-learned model 52.

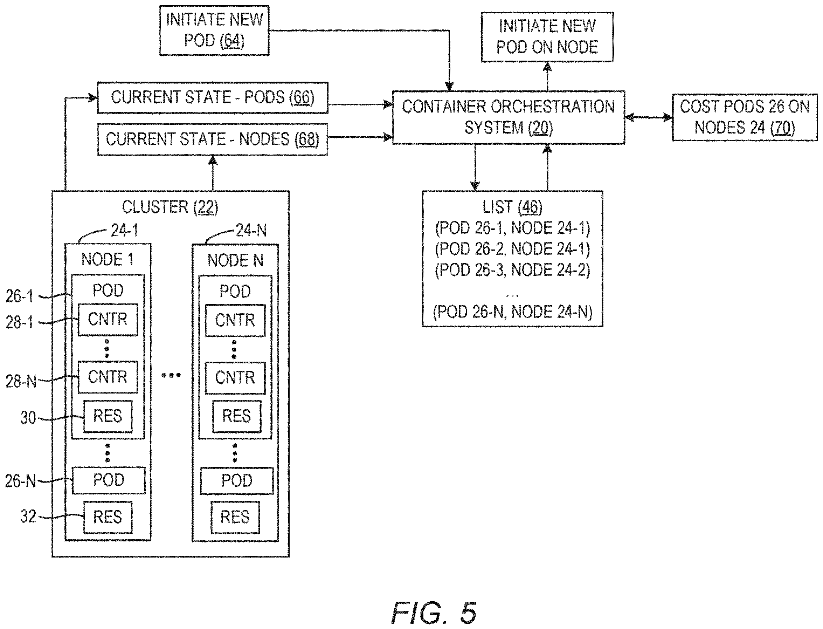

Figure 5 is a block diagram of the runtime environment of Figure 1 for scheduling optimization for containerized instances, according to one example. Elements of Figure 1 are referenced in describing Figure 5 for the sake of clarity. In the example of Figure 5, the container orchestration system 20 may determine that a containerized instance 64 (e.g., a new pod, a new container) is to be initiated on a node of the nodes 24 in the cluster 22. The container orchestration system 20 can determine a requested state for the containerized instance 64, an updated current state 66 of each containerized instance of the containerized instances (e.g., each pod of the pods 26), and an updated current state 68 of each node of the nodes 24. For example, the requested state for the containerized instance 64 may be a user-provided request for an amount of resources for the containerized instance 64, such as a number of virtual CPUs for the containerized instance 64 to use. The requested state for the containerized instance 64 and the current state 66 can include information similar to the information included in the current state 34 and the current state 68 can include information similar to the information included in the current state 36.

The container orchestration system 20 can calculate a cost 70 for each node of the nodes 24. The cost 70 for each node can be associated with each containerized instance on the respective node. The cost 70 can be based on the requested state for the containerized instance 64, the current state 66 of each containerized instance (e.g., each pod) on the respective node, and the current state 68 of the respective node. For instance, in order to calculate the cost 70 for each node of the nodes 24, the container orchestration system 20 can determine costs for each containerized instance, including the containerized instance 64, to execute on the respective node, such as computing resources needed to execute the respective containerized instance on the respective node based on the requested state for the containerized instance 64 and the current state 66. In order to calculate the cost 70 for each node of the nodes 24, the container orchestration system 20 can also determine costs for each node to execute in the cluster 22, such as computing resources needed to execute the respective node in the cluster 22 based on the current state 68. The container orchestration system 20 can also determine costs to move each containerized instance, including the containerized instance 64, to each node, such as computing resources, performance costs, data costs, and expected gains in performance and resources, as non-limiting examples, in order to calculate the cost 70.

The container orchestration system 20 can update the list 46 of preferred nodes of the nodes 24 for each containerized instance of the containerized instances (e.g., each pod of the pods 26) to execute on. The list 46 can be updated based on the requested state for the containerized instance 64, the current state 66 of each containerized instance of the containerized instances (e.g., each pod of the pods 26), the current state 68 of each node of the nodes 24, and the cost 60 for each node. For instance, the updated list 46 may include a pair for the containerized instance 64 and the preferred node for the containerized instance 64 to execute on. For example, before determining that the containerized instance 64 is to be initiated on a node of the nodes 24 in the cluster 22, the list 46 may have included a pair of pod 26-1 and node 24-1, and after determining that the containerized instance 64 is to be initiated, the list 46 may be updated and instead include a pair of pod 26-1 and node 24-2 and a pair for the containerized instance 64 and node 24-1, indicating that the preferred node for pod 26-1 is now node 24-2 instead of node 24-1 and the preferred node for the containerized instance 64 is node 24-1. In some examples, the list 46 can additionally be updated based on a performance constraint associated with the current state 66 of each containerized instance, including the containerized instance 64 (e.g., computing resources of the containerized instances, size of the containerized instances, or user-provided constraints, as non-limiting examples) and/or a performance constraint associated with the cost 70 associated with each containerized instance on each node (e.g., a maximum cost for public clouds or user-provided constraints, as non-limiting examples). The container orchestration system 20 can access the updated list 46 of preferred nodes of the nodes 24 for each containerized instance of the containerized instances (e.g., each pod of the pods 26) to execute on and cause the containerized instance 64 to be initiated on the preferred node of the nodes 24 as indicated in the pair for the containerized instance 64 in the updated list 46.

In some implementations, the list 46 can be updated by using the machine-learned model, which may implement a reinforcement learning algorithm in some examples. The machine-learned model may receive the requested state for the containerized instance 64, the current state 66 of each containerized instance of the containerized instances (e.g., each pod of the pods 26), the current state 68 of each node of the nodes 24, and the cost 70 for each node. The machine-learned model can use the requested state for the containerized instance 64, the current state 66 of each containerized instance, the current state 68 of each node, and the cost 70 for each node to determine a policy for each containerized instance (e.g., each pod), including the containerized instance 64. The policy for a containerized instance may be the pair of the containerized instance and the preferred node for the containerized instance to execute on after determining that the containerized instance 64 is to be initiated on a node, the requested state for the containerized instance 64, the current state 56, the current state 58, and the cost 60. The list 46 can be updated by being based on the policy, and the updated list 46 can be an output of the machine-learned model that the container orchestration system 20 can access.

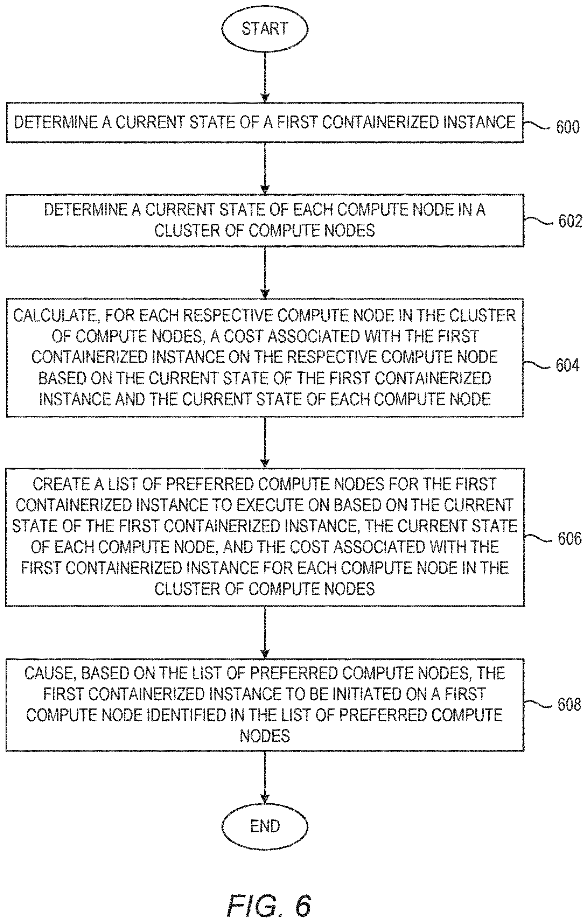

Figure 6 is a flowchart of a method for scheduling optimization for containerized instances in the runtime environment of Figure 1, according to one example. Elements of Figure 1 are referenced in describing Figure 6 for the sake of clarity. In Figure 6, operations begin with a processor device of a computing device, such as the processor device 16 of the computing device 12 of Figure 1, the processor device 16 to determine a current state of a first containerized instance (block 600). The processor device 16 is further to determine a current state of each compute node in a cluster of compute nodes (block 602). The processor device 16 is further to calculate, for each respective compute node in the cluster of compute nodes, a cost associated with the first containerized instance on the respective compute node based on the current state of the first containerized instance and the current state of each compute node (block 604). The processor device 16 is further to create a list of preferred compute nodes for the first containerized instance to execute on based on the current state of the first containerized instance, the current state of each compute node, and the cost associated with the first containerized instance for each compute node in the cluster of compute nodes (block 606). The processor device 16 is further to cause based on the list of preferred compute nodes, the first containerized instance to be initiated on a first compute node identified in the list of preferred compute nodes (block 608).

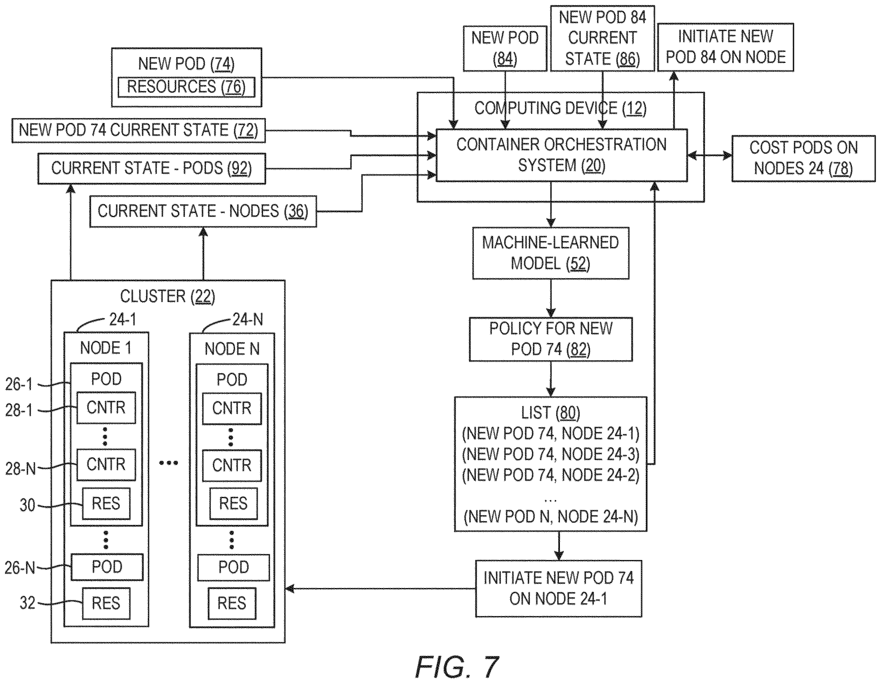

Figure 7 is a block diagram of the runtime environment of Figure 1 for scheduling optimization for containerized instances, according to one example. Elements of Figure 1 are referenced in describing Figure 7 for the sake of clarity. In the example of Figure 7, the container orchestration system 20 may determine a current state 72 of a new containerized instance 74 (e.g., a pod, a container). The container orchestration system 20 can determine the current state 72 of the new containerized instance 74 by obtaining the resources 76 of the new containerized instance 74 from the new containerized instance 74. The resources 76 may include computing resources available for use or requested by the new containerized instance 74, such as CPU and memory as non-limiting examples. The current state 72 can include the resources 76 of the new containerized instance 74, operating costs, the availability of the new containerized instance 74 (e.g., network availability, resource availability), and the number of containers running on the new containerized instance 74 (e.g., when the new containerized instance 74 is a pod), as non-limiting examples. The container orchestration system 20 can determine the current state 36 of each node of the nodes 24 in the cluster 22.

The container orchestration system 20 can calculate a cost 78 for each node of the nodes 24. The cost 78 for each node can be associated with the new containerized instance 74 on the respective node. The cost 78 can be based on the current state 72 of the new containerized instance 74 and the current state 36 of each node of the nodes 24 in the cluster 22. In order to calculate the cost 78 for each node of the nodes 24, the container orchestration system 20 can determine costs for the new containerized instance 74 to execute on the respective node, such as computing resources (e.g., CPU and memory) needed to execute the new containerized instance 74 on the respective node. For instance, the current state 72 of the new containerized instance 74 may indicate the resources 76 of the new containerized instance 74 and the availability of the new containerized instance 74 (e.g., network availability, resource availability), which the container orchestration system 20 can use to determine the costs for the new containerized instance 74 to execute on the respective node. In order to calculate the cost 78 for each node of the nodes 24, the container orchestration system 20 can also determine costs for each node to execute in the cluster 22, such as computing resources (e.g., CPU and memory) needed to execute the respective node in the cluster 22 based on the current state 36 of the respective node. In order to calculate the cost 38 for each node of the nodes 24, the container orchestration system 20 can also determine costs 44 to move the new containerized instance 74 and each containerized instance of the containerized instances (e.g., each pod of the pods 26) to each node of the nodes 24. The costs 44 to move the containerized instances to each node can include computing resources (e.g., CPU and memory) needed to move each containerized instance to each node, performance costs, such as degradation in performance due to the move, data costs, such as the cost to move data, costs associated with cloud providers, and expected gains in performance and resources due to the move, as non-limiting examples.

The container orchestration system 20 may create a list 80 of preferred nodes of the nodes 24 for the new containerized instance 74 to execute on. The list 80 may be based on the current state 72 of the new containerized instance 74, the current state 36 of each node of the nodes 24, and the cost 78 associated with the new containerized instance 74 on each node. The list 80 may be a list of preferred nodes of the nodes 24 for the new containerized instance 74 to be initiated on. For instance, the list 80 may be a list of ordered pairs of the new containerized instance 74 and a node that is a preferred node of the nodes 24 for the new containerized instance 74 to execute on for optimal performance of the containerized instance, the node, and the cluster 22. For example, the first pair in the list may be the new containerized instance 74 paired with node 24-1, the second pair in the list may be the new containerized instance 74 paired with node 24-3, and so on with pairs for every node of the nodes 24, which indicates that the preferred node for the new containerized instance 74 is node 24-1 because node 24-1 is listed before node 24-3. In some examples, the list 80 can additionally be created based on a performance constraint associated with the current state 72 of the new containerized instance 74 (e.g., computing resources of the new containerized instance 74, size of the new containerized instance 74, or user-provided constraints, as non-limiting examples) and/or a performance constraint associated with the cost 78 associated with the new containerized instance 74 on each node (e.g., a maximum cost for public clouds or user-provided constraints, as non-limiting examples). The list 80 may be stored in the storage device 18, a database, a cloud computing device, or a server, as non-limiting examples, or by another method to store the list 80.

In some implementations, the container orchestration system 20 may create the list 80 by using the machine-learned model 52, which may implement a reinforcement learning algorithm in some examples. The machine-learned model 52 may receive the current state 72 of the new containerized instance 74, the current state 36 of each node of the nodes 24, and the cost 78 associated with the new containerized instance 74 on each node. The machine-learned model 52 can use the current state 72 of the new containerized instance 74, the current state 36 of each node, and the cost 38 associated with the new containerized instance 74 on each node to determine a policy 82 for the new containerized instance 74. The policy 82 for the new containerized instance 74 may be ordered pairs of the new containerized instance 74 and a preferred node for the new containerized instance 74 to execute on. The list 80 can be based on the policy 82 and can be an output of the machine-learned model 52. For instance, the list 80 can include the policy 82 determined by the machine-learned model 52 for the new containerized instance 74, where the list 80 is a list of ordered pairs of the new containerized instance 74 and a node that is a preferred node of the nodes 24 for the new containerized instance 74 to execute on (i.e., the policy 82 for the new containerized instance 74), and the list 80 can be the output of the machine-learned model 52.

The container orchestration system 20 may cause the new containerized instance 74 to be initiated on a node of the nodes 24 based on the list 80 of preferred nodes, where the node that the new containerized instance 74 is initiated on is identified in the list 80 as the preferred node for the new containerized instance 74, such as the first ordered pair in the list 80.

In some examples, the container orchestration system 20 may determine that another containerized instance 84 (e.g., a new pod, a new container) is to be initiated on a node of the nodes 24 in the cluster 22. The container orchestration system 20 can determine a current state 86 of the containerized instance 84, an updated current state 72 of the new containerized instance 74, which is on a node, a current state 92 of each containerized instance of the containerized instances (e.g., each pod of the pods 26), and an updated current state 36 of each node of the nodes 24, which can be used by the container orchestration system 20 to calculate an updated cost (e.g., the cost 78) for each node that is associated with each containerized instance on the respective node. For instance, the container orchestration system 20 can determine costs for each containerized instance, including the containerized instance 84, to execute on the respective node, such as computing resources needed to execute the respective containerized instance on the respective node based on the current state 86 of the containerized instance 84, the current state 72 of the new containerized instance 74, the current state 92 of each containerized instance, and the current state 36 of each node. The container orchestration system 20 can also determine costs for each node to execute in the cluster 22, such as computing resources needed to execute the respective node in the cluster 22 and costs to move each containerized instance, including the containerized instance 84, to each node, such as computing resources, performance costs, data costs, and expected gains in performance and resources, as non-limiting examples, which can be included in the updated cost (e.g., the cost 78).

The container orchestration system 20 can update the list 80 based on the current states and the costs. For instance, the updated list 80 may include a pair for the containerized instance 84 and the preferred node for the containerized instance 84 to execute on. In some examples, the list 80 can additionally be updated based on a performance constraint associated with the current state of each containerized instance, including the containerized instance 84 (e.g., computing resources of the containerized instances, size of the containerized instances, or user-provided constraints, as non-limiting examples) and/or a performance constraint associated with the cost associated with each containerized instance on each node (e.g., a maximum cost for public clouds or user-provided constraints, as non-limiting examples). The container orchestration system 20 can access the updated list 80 and cause the containerized instance 84 to be initiated on the preferred node of the nodes 24 as indicated in the pair for the containerized instance 84 in the updated list 80.

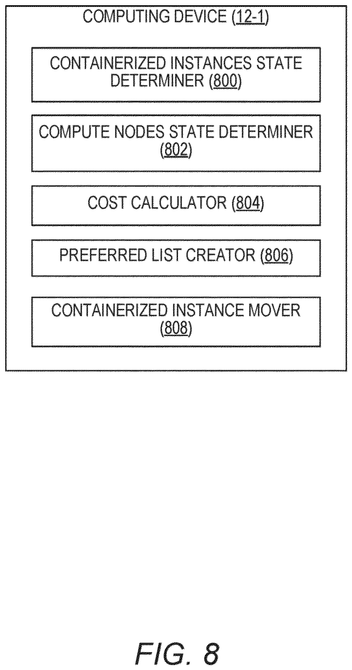

Figure 8 is a block diagram of a computing device 12-1 suitable for implementing aspects illustrated in Figures 1-5 according to one example. The computing device 12-1 implements identical functionality as that described above with regard to the computing device 12. The computing device 12-1 includes a containerized instances state determiner 800 to determine a first current state of each containerized instance of a plurality of containerized instances executing on a compute node in a cluster of compute nodes. In some implementations, the containerized instances state determiner 800 determines the first current state of each containerized instance of the plurality of containerized instances executing on a compute node in the cluster of compute nodes by obtaining, from each containerized instance of the plurality of containerized instances, resources of each respective containerized instance of the plurality of containerized instances. The containerized instances state determiner 800 may comprise executable software instructions configured to program a processor device to implement the functionality of determining a current state of each containerized instance of a plurality of containerized instances executing on a compute node in a cluster of compute nodes, may comprise circuitry including, by way of non-limiting example, an application-specific integrated circuit (ASIC), field-programmable gate array (FPGA), or may comprise a combination of executable software instructions and circuitry.

The computing device 12-1 also includes a compute nodes state determiner 802 to determine a first current state of each compute node in the cluster of compute nodes. In some implementations, the compute nodes state determiner 802 determines the first current state of each compute node in the cluster of compute nodes by obtaining, from each compute node in the cluster of compute nodes, resources of each respective compute node in the cluster of compute nodes. The compute nodes state determiner 802 may comprise executable software instructions configured to program a processor device to implement the functionality of determining a current state of each compute node in the cluster of compute nodes, may comprise circuitry including, by way of non-limiting example, an ASIC, FPGA, or may comprise a combination of executable software instructions and circuitry.

The computing device 12-1 also includes a cost calculator 804 to calculate, for each respective compute node in the cluster of compute nodes, a first cost associated with each containerized instance on the respective compute node based on the first current state of each containerized instance and the first current state of each compute node. In some implementations, the cost calculator 804 calculates, for each respective compute node in the cluster of compute nodes, the first cost associated with each containerized instance on the respective compute node based on the first current state of each containerized instance and the first current state of each compute node by determining costs for each containerized instance with the respective first current state to execute on the respective compute node in the cluster of compute nodes with the respective first current state; determining costs for the respective compute node with the respective first current state to execute in the cluster of compute nodes; determining costs to move each containerized instance to the respective compute node; and calculating, for the respective compute node, the first cost associated with each containerized instance on the respective compute node based on the costs for each containerized instance, the costs for the respective compute node, and the costs to move each containerized instance to the respective compute node. The cost calculator 804 may comprise executable software instructions configured to program a processor device to implement the functionality of calculating, for each respective compute node in the cluster of compute nodes, a cost associated with each containerized instance on the respective compute node based on the current state of each containerized instance and the current state of each compute node, may comprise circuitry including, by way of non-limiting example, an ASIC, FPGA, or may comprise a combination of executable software instructions and circuitry.

The computing device 12-1 also includes a preferred list creator 806 to create a list of preferred compute nodes for each containerized instance to execute on based on the first current state of each containerized instance, the first current state of each compute node, and the first cost associated with each containerized instance for each compute node in the cluster of compute nodes. In some implementations, the preferred list creator 806 creates the list of preferred compute nodes for each containerized instance to execute on based on the first current state of each containerized instance, the first current state of each compute node, and the first cost associated with each containerized instance for each compute node in the cluster of compute nodes by receiving, by a machine-learned model, the first current state of each containerized instance, the first current state of each compute node, and the first cost associated with each containerized instance for each compute node in the cluster of compute nodes; determining, by the machine-learned model, a policy for each containerized instance based on the first current state of each containerized instance, the first current state of each compute node, and the first cost associated with each containerized instance for each compute node in the cluster of compute nodes; and outputting, by the machine-learned model, the list of preferred compute nodes based on the policy. The preferred list creator 806 may comprise executable software instructions configured to program a processor device to implement the functionality of creating a list of preferred compute nodes for each containerized instance to execute on based on the current state of each containerized instance, the current state of each compute node, and the cost associated with each containerized instance for each compute node in the cluster of compute nodes, may comprise circuitry including, by way of non-limiting example, an ASIC, FPGA, or may comprise a combination of executable software instructions and circuitry.

The computing device 12-1 also includes a containerized instance mover 808 to cause, based on the list of preferred compute nodes, a first containerized instance of the plurality of containerized instances to be moved to a first compute node identified in the list of preferred compute nodes. The containerized instance mover 808 may comprise executable software instructions configured to program a processor device to implement the functionality of causing, based on the list of preferred compute nodes, a first containerized instance of the plurality of containerized instances to be moved to a first compute node identified in the list of preferred compute nodes, may comprise circuitry including, by way of non-limiting example, an ASIC, FPGA, or may comprise a combination of executable software instructions and circuitry.

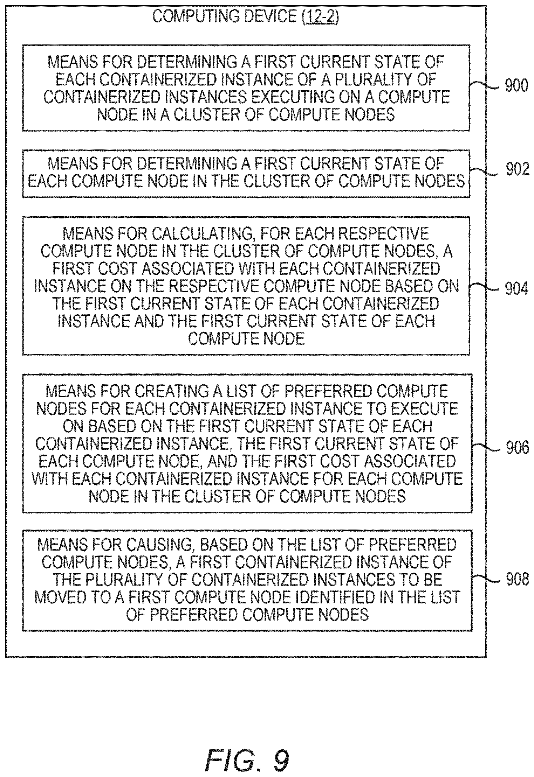

Figure 9 is a block diagram of a computing device 12-2 according to additional implementations. The computing device 12-2 implements identical functionality as that described above with regard to the computing device 12. In this implementation, the computing device 12-2 includes a means 900 for determining a first current state of each containerized instance of a plurality of containerized instances executing on a compute node in a cluster of compute nodes. The means 900 may, in some implementations, obtain, from each containerized instance of the plurality of containerized instances, resources of each respective containerized instance of the plurality of containerized instances. The means 900 may be implemented in any number of manners, including, for example via the containerized instance state determiner 800 illustrated in Figure 8.

The computing device 12-2 also includes a means 902 for determining a first current state of each compute node in the cluster of compute nodes. The means 902 may, in some implementations, obtain, from each compute node in the cluster of compute nodes, resources of each respective compute node in the cluster of compute nodes. The means 902 may be implemented in any number of manners, including, for example via the compute nodes state determiner 802 illustrated in Figure 8.

The computing device 12-2 also includes a means 904 for calculating, for each respective compute node in the cluster of compute nodes, a first cost associated with each containerized instance on the respective compute node based on the first current state of each containerized instance and the first current state of each compute node. The means 904 may, in some implementations, determine costs for each containerized instance with the respective first current state to execute on the respective compute node in the cluster of compute nodes with the respective first current state; determine costs for the respective compute node with the respective first current state to execute in the cluster of compute nodes; determine costs to move each containerized instance to the respective compute node; and calculate, for the respective compute node, the first cost associated with each containerized instance on the respective compute node based on the costs for each containerized instance, the costs for the respective compute node, and the costs to move each containerized instance to the respective compute node. The means 904 may be implemented in any number of manners, including, for example via the cost calculator 804 illustrated in Figure 8.

The computing device 12-2 also includes a means 906 for creating a list of preferred compute nodes for each containerized instance to execute on based on the first current state of each containerized instance, the first current state of each compute node, and the first cost associated with each containerized instance for each compute node in the cluster of compute nodes. The means 906 may, in some implementations, receive, by a machine-learned model, the first current state of each containerized instance, the first current state of each compute node, and the first cost associated with each containerized instance for each compute node in the cluster of compute nodes; determine, by the machine-learned model, a policy for each containerized instance based on the first current state of each containerized instance, the first current state of each compute node, and the first cost associated with each containerized instance for each compute node in the cluster of compute nodes; and output, by the machine-learned model, the list of preferred compute nodes based on the policy. The means 906 may be implemented in any number of manners, including, for example via the preferred list creator 806 illustrated in Figure 8.

The computing device 12-2 also includes a means 908 for causing, based on the list of preferred compute nodes, a first containerized instance of the plurality of containerized instances to be moved to a first compute node identified in the list of preferred compute nodes. The means 908 may be implemented in any number of manners, including, for example via the containerized instance mover 808 illustrated in Figure 8.

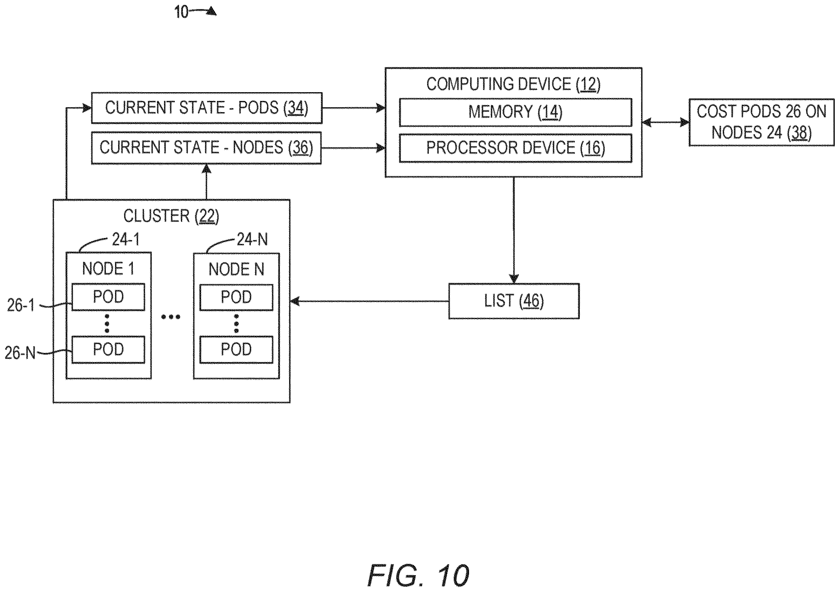

Figure 10 is a block diagram of the runtime environment of Figure 1 for scheduling optimization for containerized instances, according to one example. Elements of Figure 1 are referenced in describing Figure 10 for the sake of clarity. In the example of Figure 10, the runtime environment 10 includes a computing device 12 that comprises a system memory 14 and a processor device 16 coupled to the system memory 14. The processor device 16 is to determine a first current state 34 of each containerized instance of a plurality of containerized instances 26 executing on a compute node in a cluster 22 of compute nodes 24. The processor device 16 is further to determine a first current state 36 of each compute node in the cluster 22 of compute nodes 24. The processor device 16 is further to calculate, for each respective compute node in the cluster 22 of compute nodes 24, a first cost 38 associated with each containerized instance on the respective compute node based on the first current state 34 of each containerized instance and the first current state 36 of each compute node. The processor device 16 is further to create a list 46 of preferred compute nodes for each containerized instance to execute on based on the first current state 34 of each containerized instance, the first current state 36 of each compute node, and the first cost 38 associated with each containerized instance for each compute node in the cluster 22 of compute nodes 24. The processor device 16 is further to cause, based on the list 46 of preferred compute nodes, a first containerized instance of the plurality of containerized instances 26 to be moved to a first compute node identified in the list 46 of preferred compute nodes.

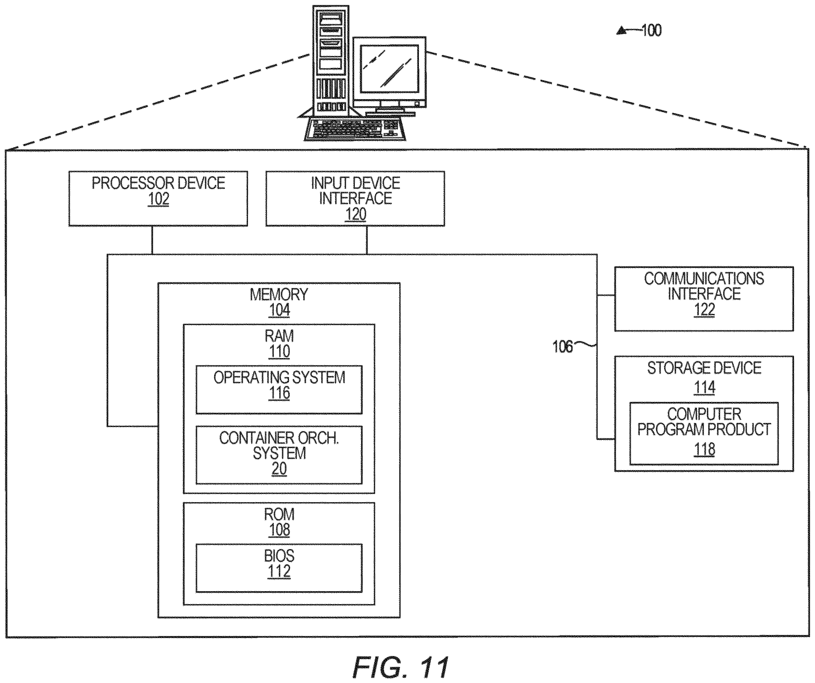

Figure 11 is a block diagram of a computing device 100, such as the computing device 12 of Figure 1, in a runtime environment, such as the runtime environment 10, suitable for implementing examples according to one example. The computing device 100 may comprise any computing or electronic device capable of including firmware, hardware, and/or executing software instructions to implement the functionality described herein. The computing device 100 includes a processor device 102, such as the processor device 16, a system memory 104, such as the system memory 14, and a system bus 106. The system bus 106 provides an interface for system components including, but not limited to, the system memory 104 and the processor device 102. The processor device 102 can be any commercially available or proprietary processor.

The system bus 106 may be any of several types of bus structures that may further interconnect to a memory bus (with or without a memory controller), a peripheral bus, and/or a local bus using any of a variety of commercially available bus architectures. The system memory 14 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)). A basic input/output system (BIOS) 112 may be stored in the non-volatile memory 108 and can include the basic routines that help to transfer information between elements within the computing device 100. The volatile memory 110 may also include a high-speed RAM, such as static RAM, for caching data.

The computing device 100 may further include or be coupled to a non-transitory computer-readable storage medium such as a storage device 114, such as the storage device 18, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

A number of modules can be stored in the storage device 114 and in the volatile memory 110, including an operating system 116 and one or more program modules, such as the container orchestration system 20, which may implement the functionality described herein in whole or in part. All or a portion of the examples may be implemented as a computer program product 118 stored on a transitory or non-transitory computer-usable or computer-readable storage medium, such as the storage device 114, which includes complex programming instructions, such as complex computer-readable program code, to cause the processor device 102 to carry out the steps described herein. Thus, the computer-readable program code can comprise software instructions for implementing the functionality of the examples described herein when executed on the processor device 102. The processor device 102, in conjunction with the container orchestration system 20 in the volatile memory 110, may serve as a controller, or control system, for the computing device 100 that is to implement the functionality described herein.

An operator, such as a user, may also be able to enter one or more configuration commands through a keyboard (not illustrated), a pointing device such as a mouse (not illustrated), or a touch-sensitive surface such as a display device (not illustrated). Such input devices may be connected to the processor device 102 through an input device interface 120 that is coupled to the system bus 106 but can be connected by other interfaces such as a parallel port, an Institute of Electrical and Electronic Engineers (IEEE) 1394 serial port, a Universal Serial Bus (USB) port, an IR interface, and the like. The computing device 100 may also include a communications interface 122 suitable for communicating with the network as appropriate or desired. The computing device 100 may also include a video port (not illustrated) configured to interface with the display device (not illustrated), to provide information to the user.

Other computer system designs and configurations may also be suitable to implement the systems and methods described herein. The following examples illustrate various implementations in accordance with one or more aspects of the disclosure.

Example 1 is a method comprising determining, by a container orchestration system (COS) executing on a computing device, a requested state of a first containerized instance; determining, by the COS, a current state of each compute node in a cluster of compute nodes; calculating, by the COS, for each respective compute node in the cluster of compute nodes, a cost associated with the first containerized instance on the respective compute node based on the requested state of the first containerized instance and the current state of each compute node; creating, by the COS, a list of preferred compute nodes for the first containerized instance to execute on based on the requested state of the first containerized instance, the current state of each compute node, and the cost associated with the first containerized instance for each compute node in the cluster of compute nodes; and causing, by the COS based on the list of preferred compute nodes, the first containerized instance to be initiated on a first compute node identified in the list of preferred compute nodes.

Example 2 is the method of example 1 further comprising determining that a second containerized instance is to be initiated on a compute node in the cluster of compute nodes; accessing the list of preferred compute nodes; and causing the second containerized instance to be initiated on a second compute node in the cluster of compute nodes based on the list of preferred compute nodes.

Example 3 is the method of example 2 further comprising, prior to accessing the list of preferred compute nodes, determining a requested state of the second containerized instance; determining a current state of each containerized instance of the plurality of containerized instances executing on a compute node in the cluster of compute nodes; determining a second current state of each compute node in the cluster of compute nodes; calculating, for each respective compute node in the cluster of compute nodes, a second cost associated with each containerized instance on the respective compute node based on the requested state of the second containerized instance, the current state of each containerized instance, and the second current state of each compute node; and updating the list of preferred compute nodes based on the requested state of the second containerized instance, the current state of each containerized instance, the second current state of each compute node, and the second cost associated with each containerized instance for each compute node in the cluster of compute nodes.

Example 4 is the method of example 1 wherein determining the requested state of the first containerized instance comprises obtaining resources requested for the first containerized instance.

Example 5 is the method of example 4 wherein the requested resources for the first containerized instance comprise computing resources requested for the first containerized instance to execute on a compute node in the cluster of compute nodes.

Example 6 is the method of example 1 wherein creating the list of preferred compute nodes for the first containerized instance to execute on based on the requested state of the first containerized instance, the current state of each compute node, and the cost associated with the first containerized instance for each compute node in the cluster of compute nodes comprises receiving, by a machine-learned model, the requested state of the first containerized instance, the current state of each compute node, and the cost associated with the first containerized instance for each compute node in the cluster of compute nodes; determining, by the machine-learned model, a policy for the first containerized instance based on the requested state of the first containerized instance, the current state of each compute node, and the cost associated with the first containerized instance for each compute node in the cluster of compute nodes; and outputting, by the machine-learned model, the list of preferred compute nodes based on the policy.

Example 7 is a computing device that includes a memory and a processor device coupled to the memory. The processor device is to determine a current state of a first containerized instance; determine a requested state of each compute node in a cluster of compute nodes; calculate, for each respective compute node in the cluster of compute nodes, a cost associated with the first containerized instance on the respective compute node based on the requested state of the first containerized instance and the current state of each compute node; create a list of preferred compute nodes for the first containerized instance to execute on based on the requested state of the first containerized instance, the current state of each compute node, and the cost associated with the first containerized instance for each compute node in the cluster of compute nodes; and cause, based on the list of preferred compute nodes, the first containerized instance to be initiated on a first compute node identified in the list of preferred compute nodes.

Example 8 is the computing device of example 7 wherein the processor device is further to determine that a second containerized instance is to be initiated on a compute node in the cluster of compute nodes; access the list of preferred compute nodes; and cause the second containerized instance to be initiated on a second compute node in the cluster of compute nodes based on the list of preferred compute nodes.

Example 9 is the computing device of example 8 wherein the processor device is further to, prior to accessing the list of preferred compute nodes, determine a requested state of the second containerized instance; determine a current state of each containerized instance of the plurality of containerized instances executing on a compute node in the cluster of compute nodes; determine a second current state of each compute node in the cluster of compute nodes; calculate, for each respective compute node in the cluster of compute nodes, a second cost associated with each containerized instance on the respective compute node based on the requested state of the second containerized instance, the current state of each containerized instance, and the second current state of each compute node; and update the list of preferred compute nodes based on the requested state of the second containerized instance, the current state of each containerized instance, the second current state of each compute node, and the second cost associated with each containerized instance for each compute node in the cluster of compute nodes.

Example 10 is the computing device of example 7 wherein to determine the requested state of the first containerized instance, the processor device is further to obtain resources requested for the first containerized instance.

Example 11 is the computing device of example 10 wherein the requested resources for the first containerized instance comprise computing resources requested for the first containerized instance to execute on a compute node in the cluster of compute nodes.

Example 12 is the computing device of example 7 wherein to create the list of preferred compute nodes for the first containerized instance to execute on based on the requested state of the first containerized instance, the current state of each compute node, and the cost associated with the first containerized instance for each compute node in the cluster of compute nodes, the processor device is further to receive, by a machine-learned model, the requested state of the first containerized instance, the current state of each compute node, and the cost associated with the first containerized instance for each compute node in the cluster of compute nodes; determine, by the machine-learned model, a policy for the first containerized instance based on the requested state of the first containerized instance, the current state of each compute node, and the cost associated with the first containerized instance for each compute node in the cluster of compute nodes; and output, by the machine-learned model, the list of preferred compute nodes based on the policy.

Example 13 is a non-transitory computer-readable storage medium that includes computer-executable instructions that, when executed, cause one or more processor devices to determine a current state of a first containerized instance; determine a requested state of each compute node in a cluster of compute nodes; calculate, for each respective compute node in the cluster of compute nodes, a cost associated with the first containerized instance on the respective compute node based on the requested state of the first containerized instance and the current state of each compute node; create a list of preferred compute nodes for the first containerized instance to execute on based on the requested state of the first containerized instance, the current state of each compute node, and the cost associated with the first containerized instance for each compute node in the cluster of compute nodes; and cause, based on the list of preferred compute nodes, the first containerized instance to be initiated on a first compute node identified in the list of preferred compute nodes.

Example 14 is the non-transitory computer-readable storage medium of example 13 wherein the instructions are further to cause the processor device to determine that a second containerized instance is to be initiated on a compute node in the cluster of compute nodes; access the list of preferred compute nodes; and cause the second containerized instance to be initiated on a second compute node in the cluster of compute nodes based on the list of preferred compute nodes.

Example 15 is the non-transitory computer-readable storage medium of example 14 wherein the instructions are further to cause the processor device to, prior to accessing the list of preferred compute nodes, determine a requested state of the second containerized instance; determine a current state of each containerized instance of the plurality of containerized instances executing on a compute node in the cluster of compute nodes; determine a second current state of each compute node in the cluster of compute nodes; calculate, for each respective compute node in the cluster of compute nodes, a second cost associated with each containerized instance on the respective compute node based on the requested state of the second containerized instance, the current state of each containerized instance, and the second current state of each compute node; and update the list of preferred compute nodes based on the requested state of the second containerized instance, the current state of each containerized instance, the second current state of each compute node, and the second cost associated with each containerized instance for each compute node in the cluster of compute nodes.

Example 16 is the non-transitory computer-readable storage medium of example 13 wherein to determine the requested state of the first containerized instance, the instructions are further to cause the processor device to obtain resources requested for the first containerized instance.

Example 17 is the non-transitory computer-readable storage medium of example 16 wherein the requested resources for the first containerized instance comprise computing resources requested for the first containerized instance to execute on a compute node in the cluster of compute nodes.

Example 18 is the non-transitory computer-readable storage medium of example 13 wherein to create the list of preferred compute nodes for the first containerized instance to execute on based on the requested state of the first containerized instance, the current state of each compute node, and the cost associated with the first containerized instance for each compute node in the cluster of compute nodes, the instructions are further to cause the processor device to receive, by a machine-learned model, the requested state of the first containerized instance, the current state of each compute node, and the cost associated with the first containerized instance for each compute node in the cluster of compute nodes; determine, by the machine-learned model, a policy for the first containerized instance based on the requested state of the first containerized instance, the current state of each compute node, and the cost associated with the first containerized instance for each compute node in the cluster of compute nodes; and output, by the machine-learned model, the list of preferred compute nodes based on the policy.

Example 19 is a computing device including a containerized instance state determiner to determine a requested state of a first containerized instance; a compute nodes state determiner to determine a current state of each compute node in a cluster of compute nodes; a cost calculator to calculate, for each respective compute node in the cluster of compute nodes, a cost associated with the first containerized instance on the respective compute node based on the requested state of the first containerized instance and the current state of each compute node; a preferred list creator to create a list of preferred compute nodes for the first containerized instance to execute on based on the requested state of the first containerized instance, the current state of each compute node, and the cost associated with the first containerized instance for each compute node in the cluster of compute nodes; and a containerized instance initiator to cause, based on the list of preferred compute nodes, the first containerized instance to be initiated on a first compute node identified in the list of preferred compute nodes.

Example 20 is a computing device including a means for determining a current state of a first containerized instance; a means for determining a requested state of each compute node in a cluster of compute nodes; a means for calculating, for each respective compute node in the cluster of compute nodes, a cost associated with the first containerized instance on the respective compute node based on the requested state of the first containerized instance and the current state of each compute node; a means for creating a list of preferred compute nodes for the first containerized instance to execute on based on the requested state of the first containerized instance, the current state of each compute node, and the cost associated with the first containerized instance for each compute node in the cluster of compute nodes; and a means for causing, based on the list of preferred compute nodes, the first containerized instance to be initiated on a first compute node identified in the list of preferred compute nodes.

Individuals will recognize improvements and modifications to the preferred examples of the disclosure. All such improvements and modifications are considered within the scope of the concepts disclosed herein and the claims that follow.

## Claims

1. A method, comprising:
determining, by a container orchestration system (COS) executing on a computing device, a first current state of each containerized instance of a plurality of containerized instances executing on a compute node in a cluster of compute nodes;
determining, by the COS, a first current state of each compute node in the cluster of compute nodes;
calculating, by the COS, for each respective compute node in the cluster of compute nodes, a first cost associated with each containerized instance on the respective compute node based on the first current state of each containerized instance and the first current state of each compute node;
creating, by the COS, a list of preferred compute nodes for each containerized instance to execute on based on the first current state of each containerized instance, the first current state of each compute node, and the first cost associated with each containerized instance for each compute node in the cluster of compute nodes; and
causing, by the COS based on the list of preferred compute nodes, a first containerized instance of the plurality of containerized instances to be moved to a first compute node identified in the list of preferred compute nodes.

2. The method of claim 1, further comprising:
determining that a second containerized instance of the plurality of containerized instances is to be initiated on a compute node in the cluster of compute nodes;
accessing the list of preferred compute nodes; and
causing the second containerized instance to be initiated on a second compute node in the cluster of compute nodes based on the list of preferred compute nodes.

3. The method of claim 2, further comprising:
prior to accessing the list of preferred compute nodes, determining a second current state of each containerized instance of the plurality of containerized instances executing on a compute node in the cluster of compute nodes;
determining a second current state of each compute node in the cluster of compute nodes;
calculating, for each respective compute node in the cluster of compute nodes, a second cost associated with each containerized instance on the respective compute node based on the second current state of each containerized instance and the second current state of each compute node; and
updating the list of preferred compute nodes for each containerized instance to execute on based on the second current state of each containerized instance, the second current state of each compute node, and the second cost associated with each containerized instance for each compute node in the cluster of compute nodes.

4. The method of claim 1, wherein determining the first current state of each containerized instance of the plurality of containerized instances executing on a compute node in the cluster of compute nodes comprises obtaining, from each containerized instance of the plurality of containerized instances, resources of each respective containerized instance of the plurality of containerized instances.

5. The method of claim 1, wherein determining the first current state of each compute node in the cluster of compute nodes comprises obtaining, from each compute node in the cluster of compute nodes, resources of each respective compute node in the cluster of compute nodes.

6. The method of claim 1, wherein calculating, for each respective compute node in the cluster of compute nodes, the first cost associated with each containerized instance on the respective compute node based on the first current state of each containerized instance and the first current state of each compute node comprises:
determining costs for each containerized instance with the respective first current state to execute on the respective compute node in the cluster of compute nodes with the respective first current state;
determining costs for the respective compute node with the respective first current state to execute in the cluster of compute nodes;
determining costs to move each containerized instance to the respective compute node; and
calculating, for the respective compute node, the first cost associated with each containerized instance on the respective compute node based on the costs for each containerized instance, the costs for the respective compute node, and the costs to move each containerized instance to the respective compute node.

7. The method of claim 6, wherein:
the costs for each containerized instance with the respective first current state to execute on the respective compute node in the cluster of compute nodes comprise computing resources for executing the respective containerized instance on the respective compute node in the cluster of compute nodes;
the costs for the respective compute node with the respective first current state to execute in the cluster of compute nodes comprise computing resources for executing the respective compute node in the cluster of compute nodes; and
the costs to move each containerized instance to the respective compute node comprise computing resources to move the respective containerized instance to the respective compute node.

8. The method of claim 1, wherein creating the list of preferred compute nodes for each containerized instance to execute on based on the first current state of each containerized instance, the first current state of each compute node, and the first cost associated with each containerized instance for each compute node in the cluster of compute nodes comprises:
receiving, by a machine-learned model, the first current state of each containerized instance, the first current state of each compute node, and the first cost associated with each containerized instance for each compute node in the cluster of compute nodes;
determining, by the machine-learned model, a policy for each containerized instance based on the first current state of each containerized instance, the first current state of each compute node, and the first cost associated with each containerized instance for each compute node in the cluster of compute nodes; and
outputting, by the machine-learned model, the list of preferred compute nodes based on the policy and optionally.

9. The method of claim 8, wherein the machine-learned model comprises a reinforcement learning algorithm and optionally further comprising:
determining, by the reinforcement learning algorithm based on the first current state of each containerized instance, the first current state of each compute node, and the first cost associated with each containerized instance for each compute node in the cluster of compute nodes, actions to improve one or more of the first current state of each containerized instance and the first current state of each compute node.

10. The method of claim 1, wherein the list of preferred compute nodes comprises a list of a preferred compute node in the cluster of compute nodes for each containerized instance of the plurality of containerized instances.

11. The method of claim 1, further comprising:
obtaining a performance constraint associated with the first current state of each containerized instance;
wherein creating the list of preferred compute nodes for each containerized instance to execute on comprises creating the list of preferred compute nodes for each containerized instance to execute on based on the first current state of each containerized instance, the first current state of each compute node, the first cost associated with each containerized instance for each compute node in the cluster of compute nodes, and the performance constraint.

12. The method of claim 1, further comprising:
obtaining a performance constraint associated with the first cost associated with each containerized instance for each compute node in the cluster of compute nodes;
wherein creating the list of preferred compute nodes for each containerized instance to execute on comprises creating the list of preferred compute nodes for each containerized instance to execute on based on the first current state of each containerized instance, the first current state of each compute node, the first cost associated with each containerized instance for each compute node in the cluster of compute nodes, and the performance constraint.

13. The method of claim 1, further comprising:
determining a change in resources available on one or more compute nodes in the cluster of compute nodes;
in response to determining the change in resources available, determining a second current state of each containerized instance of the plurality of containerized instances executing on a compute node in the cluster of compute nodes;
determining a second current state of each compute node in the cluster of compute nodes;
calculating, for each respective compute node in the cluster of compute nodes, a second cost associated with each containerized instance on the respective compute node based on the second current state of each containerized instance and the second current state of each compute node; and
updating the list of preferred compute nodes for each containerized instance to execute on based on the second current state of each containerized instance, the second current state of each compute node, and the second cost associated with each containerized instance for each compute node in the cluster of compute nodes and optionally wherein updating the list of preferred compute nodes for each containerized instance to execute on comprises:
receiving, by a machine-learned model, the second current state of each containerized instance, the second current state of each compute node, and the second cost associated with each containerized instance for each compute node in the cluster of compute nodes;
determining, by the machine-learned model, a policy for each containerized instance based on the second current state of each containerized instance, the second current state of each compute node, and the second cost associated with each containerized instance for each compute node in the cluster of compute nodes; and
outputting, by the machine-learned model, the list of preferred compute nodes based on the policy.

14. A computing device, comprising:
a memory; and
a processor device coupled to the memory, the processor device to execute the method of any one of claims 1 to 13.

15. A non-transitory computer-readable storage medium that includes computer-executable instructions that, when executed, cause one or more processor devices to execute the method of any one of claims 1 to 13.
